(19) Europäisches Patentamt
European Patent Office
Office européen des brevets

(11) **EP 3 002 870 B1**

(12) **EUROPEAN PATENT SPECIFICATION**

(45) Date of publication and mention
of the grant of the patent:
**13.11.2019  Bulletin 2019/46**

(51) Int Cl.:
*H02P 27/08* (2006.01)    *H02P 29/00* (2016.01)
*H02P 29/024* (2016.01)    *H02P 6/06* (2006.01)
*H02P 6/26* (2016.01)

(21) Application number: **15187293.4**

(22) Date of filing: **29.09.2015**

(54) **METHOD FOR CONTROLLING A PERMANENT MAGNET ELECTRIC MOTOR**

VERFAHREN ZUR STEUERUNG EINES PERMANENTMAGNETMOTORS

PROCÈDE DE CONTRÔLE D'UN MOTEUR ÉLECTRIQUE À AIMANTS PERMANENTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.10.2014  IT MI20141734**

(43) Date of publication of application:
**06.04.2016  Bulletin 2016/14**

(73) Proprietor: **ELICA S.p.A.**
**60044 Fabriano (AN) (IT)**

(72) Inventors:
 • **TOMEO, Giordan**
   **60044 Fabriano, Ancona (IT)**

 • **MENCAGLIA, Mauro**
   **60044 Fabriano, Ancona (IT)**
 • **GRIPPO, Fortunato**
   **60044 Fabriano, Ancona (IT)**
 • **VICONI, Fabrizio**
   **60044 Fabriano, Ancona (IT)**
 • **MACERA, Emidio**
   **60044 Fabriano, Ancona (IT)**

(74) Representative: **Mozzi, Matteo et al**
**Jacobacci & Partners S.p.A.**
**Via Senato, 8**
**20121 Milano (IT)**

(56) References cited:
**EP-A2- 2 012 426      JP-A- H11 103 585
US-A1- 2008 315 808    US-A1- 2013 009 573**

**Description**

Technical field

The present invention relates to a method for controlling an electric motor, in particular a single-phase permanent magnet (brushless) motor.

In particular, the invention relates to a method for controlling the movement of the electric motor which allows to disable the generation of the movement power signal supplied to the motor following the detection of operation anomalies in the motor itself.

Prior art

As known, a permanent magnet electric motor or brushless motor, e.g. of the direct current (DC) type, comprises a rotor, consisting of a permanent magnet and a stator, provided with conductor windings supplied by alternating current AC voltages. In such motors, the rotor operates as induction element and is rotating, while the induced element, i.e. the stator, is supplied by the alternating current voltages generated by an inverter device starting from the direct power voltage.

The safety of a single-phase electric motor of brushless type, for example a motor configured to move a fan heater in a gas boiler, is governed by international standard EN 60335-1. In particular, such a standard requires such electric motors to be robust during use, i.e. to remain safe also in case of operation anomalies. Among the operation anomalies of the electric motor, for example, the overload conditions and blocked rotor conditions are the most significant.

Such operation anomalies may determine an increase of the operating currents flowing in the motor windings to reach values which are much higher than nominal values, with the consequent risk of overheating the entire motor apparatus and, in the worst cases, of even generating flames.

In order to avoid winding overheating problems, the motor apparatus of the electric motors of known type is equipped with air vents or appropriate cooling fans which have the function of cooling the windings by convection.

In order to ensure the safety levels required by the CEI EN 60335-1 standard it is known to provide the motor apparatus with thermal-protection devices. Such devices comprise, for example, normally closed electric switches which are mounted in series to the windings of the motor and adapted to be thermally coupled to the motor itself. During operation of the motor, when a predetermined temperature caused by the aforesaid anomalies is reached in the motor windings, such switches open preventing direct current from flowing in the windings of motor itself.

The use of such thermal-protection devices has some drawbacks. Indeed, the addition of one or more of such thermal-protections to the motor apparatus is a complex activity, in particular with reference to the creation of a thermal contact between the two parts, and is costly to the extent of affecting the total cost of the motor apparatus.

In motors which are digitally controlled, for example, by means of microprocessor, it is known to use a detection device of the current flowing in the windings operatively associated with a digital Analog-to-Digital Converter, or ADC, instead of the thermal-protection devices. Indeed, since the overheating of the motor in overload and blocked rotor conditions is due, as mentioned above, to an anomalous increase of the current on the motor windings, detecting such a current and quantifying it by the microprocessor may provide indications on the operation anomalies of the motor.

This method also has some drawbacks. Indeed, detecting such a current often requires the use of complex electronic devices (e.g. an ADC shunt resistor on the microprocessor), the cost of which significantly affects the total cost of the motor apparatus. Furthermore, the detected current signal is an analog type signal, the value of which may be altered by electromagnetic interference produced by the motor itself.

Document US 2008/315808 A1 describes a motor drive device with lock protection function and discloses: A method for controlling a single-phase permanent magnet electric motor (M) movable through a power signal (SC) generated by an electronic control apparatus (100, 200, 300) of the motor based on a reference signal (SP WM), said method comprising the steps of:

- generating, by a sensor unit (SEN, 40) associated with the motor (M), a first signal (S2) representative of the rotation speed of the motor (M);
- providing a protection block (500) of the motor against operation anomalies, which is included in said electronic control apparatus (100, 200, 300);
- providing a second signal (d) at a first input (1) of said protection block (500) of the motor, said second signal (d) being representative of duty-cycle values associated with said reference signal (SPWM) ;
- providing said first signal (S2) at a second input (2) of said protection block (500) of the motor;
- generating, by the protection block (500) of the motor, based on said first signal (S2) and second signal (d), a third (C1) signal when a first operating condition of anomalous operation of the motor (M) is detected, a fourth (C2) signal when a second operating condition of anomalous operation of the motor (M) is detected;
- disabling the generation of the power signal (SC) provided to the motor (M) by said electronic control apparatus (100, 200, 300) based on said third (C1) or fourth (C2) signals to stop the motor.

Document US 2013/009573 A1 describes a lock protection and standby mode control circuit of motor driving apparatus.

Document JP H11 103585 A discloses an inverter protector which can downsize a circuit and reduce wasteful losses.

It is the object of the present invention to devise and provide a method for controlling an electric motor, in particular a single-phase permanent magnet (brushless) motor, which allows to disable the generation of the movement power signal supplied to the motor following the detection of operation anomalies in the motor itself, stopping it in safe manner and having features which allow to overcome, at least partially, the limits and drawbacks of the known control methods.

Such an object is reached by means of a method for controlling a permanent magnet electric motor according to claim 1. Alternative embodiments of the aforesaid method are defined in the dependent claims.

Brief description of the drawings

Further advantages of the control method of the invention will result from the following description of a preferred embodiment given by way of non-limiting example, with reference to the accompanying figures, in which:

- **figure 1** shows a block chart of an electronic control apparatus of an electric motor according to a first operative example of the control;
- **figure 2** shows a block chart of an electronic control apparatus of an electric motor according to a second operative example of the control;
- **figure 3** shows a block chart of an electronic control apparatus of an electric motor according to a third operative example of the control;
- **figure 4** shows a functional block chart of a protection block included in the electronic control apparatus in figures 1-3;
- **figure 5** shows examples of signal patterns managed by the protection block in figure 4, as a function of the duty-cycle;
- **figure 6** shows examples of signal duty-cycle patterns managed by the protection block in figure 4, as a function of duty-cycle of a reference signal.

Detailed description

Similar or equivalent elements in the aforesaid figures are indicated by means of the same reference numerals.

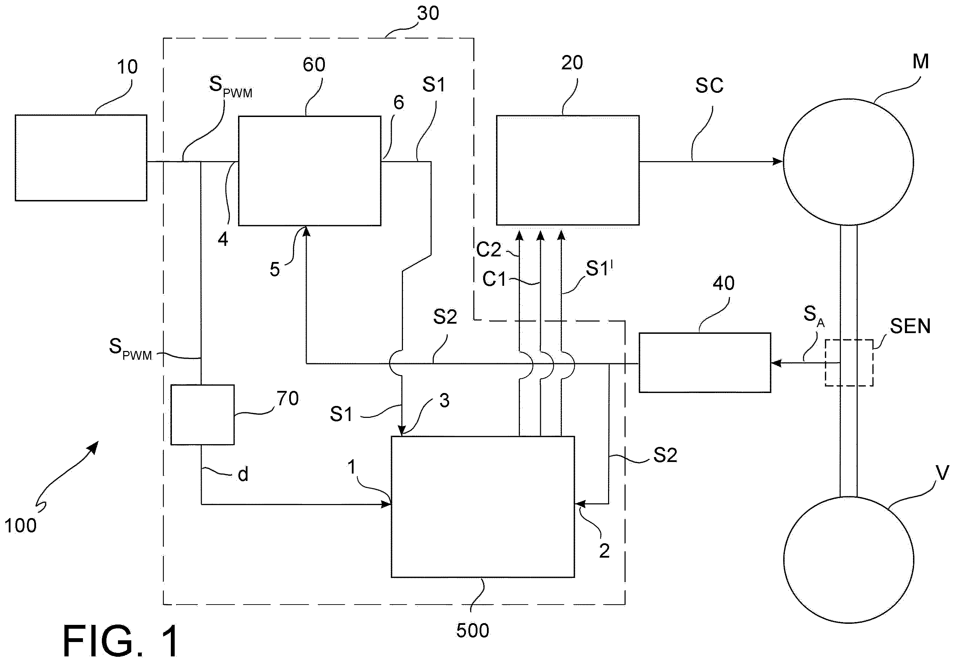

With reference to figures 1-3, a functional block chart of an electronic apparatus used in the industrial sector to output power for controlling the movement of an electric motor M according to the invention is indicated by reference numerals 100, 200, 300 as a whole. Hereinafter, such an electronic control apparatus 100, 200, 300 will be simply indicated as control apparatus.

It is worth noting that the aforementioned electric motor M is preferably a single-phase permanent magnet electric motor or brushless motor, which can be used, for example, for moving a fan heater V in a gas boiler or the like. In general, such a brushless motor M comprises a moveable rotor, consisting of a permanent magnet, and a stator provided with conductor windings supplied by alternating current AC voltages.

With reference to the examples in figures 1-3, the control apparatus 100, 200, 300 comprises a voltage generation stage 10 configured to generate a reference signal, in particular a PWM (Pulse Width Modulation) digital voltage signal, indicated by $S_{PWM}$ as a whole. Such a reference signal $S_{PWM}$ is adapted to start the movement of the motor and is preferably a signal with fixed frequency, e.g. 1kHz, and variable duty-cycle. Hereinafter, a signal representing the duty-cycle values associated with the reference signal $S_{PWM}$ will be indicated by reference d.

The control apparatus 100, 200, 300 further comprises a power stage 20 (power drive). Such a power stage 20 comprises, for example, a bridge circuit structure (not shown), in particular single-phase, including electronic power transistors, e.g. IGBT Insulated Gate Bipolar Transistors, of type known to a person skilled in the art. Such a power stage 20 is configured to generate a power signal SC, e.g. an alternating current voltage, to be supplied to the electric motor M to ensure the desired speed (or torque) to the motor M itself, i.e. to move it.

Furthermore, the control apparatus 100, 200, 300 comprises an electronic control and protection stage of the motor M against operation anomalies, indicated as a whole by reference numeral 30 and enclosed by the dashed line in figures 1-3. In particular, such a control and protection stage 30 is interposed between the voltage generation stage 10 and the power stage 20 to receive the aforementioned reference signal $S_{PWM}$.

In particular, it is worth noting that such an electronic control and protection stage 30 is indicative of a control unit of the operation of the motor M. In one embodiment, such a control unit 30 is implemented by a microcontroller provided with a respective program (firmware) integrated directly in such an electronic component. In another embodiment, some components of the control unit 30 may be realized by means of dedicated hardware blocks. It will be assumed that the control unit 30 is implemented by a microcontroller hereinafter in the description.

Furthermore, the control apparatus 100, 200, 300 comprises a sensor unit SEN associated with the motor M adapted to detect the rotation speed of the rotor of the motor M.

In an exemplary embodiment, such a sensor unit SEN is a Hall sensor. As known, a Hall sensor is configured to detect flux variations of a magnetic field, by discriminating the presence of a "NORTH" magnetic field and of a "SOUTH" magnetic field or the transition from a "NORTH" magnetic field to a "SOUTH" magnetic field and vice versa.

In the example of the invention, the Hall sensor SEN is associated with the stator of the motor M, e.g. is mounted in position integral with the stator, to detect the rotation speed of the rotor by outputting a signal $S_A$ which is representative of such a speed. In particular, the rotation speed of the rotor is as a function of the frequency of the signal $S_A$ supplied to the output of the sensor SEN.

Such a digital signal $S_A$ is, for example, a square wave signal adapted to assume a high value following a transition from the "NORTH" magnetic field to the "SOUTH" magnetic field and a low value following a transition from the "SOUTH" magnetic field to the "NORTH" one.

It is worth noting that the digital signal $S_A$ supplied by the sensor SEN is advantageously much more robust and immune from interference than a signal associated with the current reading in the motor M.

In particular, the electronic control and protection stage 30 of the apparatus 100, 200, 300 comprises a first block 40 configured to receive the signal $S_A$ from the Hall sensor SEN to generate a first signal S2, in particular of digital type, sequence of high/low signals, indicative of the angular rotation speed of the motor M. It is worth noting that the first block 40 is configured to digitalize the signal $S_A$ generated by the Hall sensor SEN, cleaning it from noise effects, and to make the first signal S2 assume the voltage levels of .the microcontroller.

In an alternative embodiment, the sensor unit SEN may be implemented by appropriate evaluation algorithms included in a software program which equips the microprocessor adapted to reconstruct the position of the rotor with respect to the stator using "state observers" to generate the aforesaid digital signal S2. As known to a person skilled in art, "state observers" are numerical modules or dynamic systems processed to estimate the evolution of the state of a system to be observed. In the specific case of the present example, which is not covered by the present invention, the state observer would be a numerical model of the motor capable of making appreciable the magnetic field of the rotor with respect to the stator if using a magnetic field sensor is not possible.

With reference to figures 1-3, the control and protection stage 30 further comprises a functional protection block 500 of the motor M against operation anomalies, or protection block in short.

Such a protection block 500 is configured to receive at a first input 1 the signal representative of the duty-cycle values d of the reference signal $S_{PWM}$, hereinafter indicated as second signal d, generated by a second functional block 70 of the electronic control and protection stage 30.

Furthermore, the protection block 500 is configured to receive, at a second input 2, the aforementioned first digital signal S2 indicative of the speed of the motor.

A third input 3 of the protection block 500 is configured to receive a fifth signal S1, in particular an activating and control signal of the power stage 20, e.g. a digital signal, to generate the aforementioned power signal SC.

It is worth noting that in the electronic apparatuses 100, 200, 300, the reference signal $S_{PWM}$ is indicative of the power supplied to the motor M and the first signal S2 contains the information regarding the supply method of the branches of the single-phase bridge circuit structure of the power stage 20.

With reference to the electronic apparatus 100 in figure 1, the fifth signal S1 is analogous to the reference signal $S_{PWM}$.

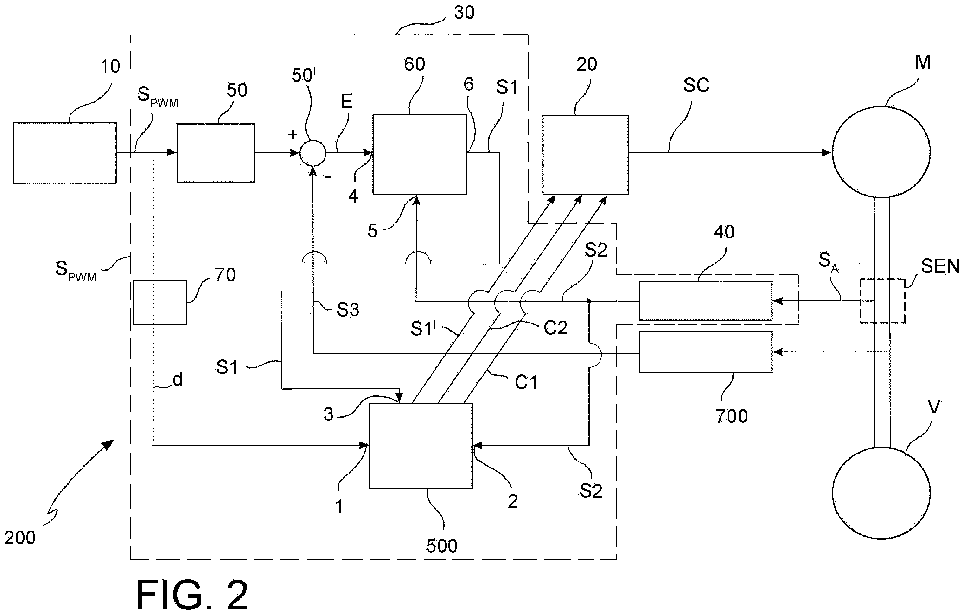

With reference to the electronic apparatus 200 in figure 2, the fifth signal S1 is generated starting from a nominal current error E on the motor M.

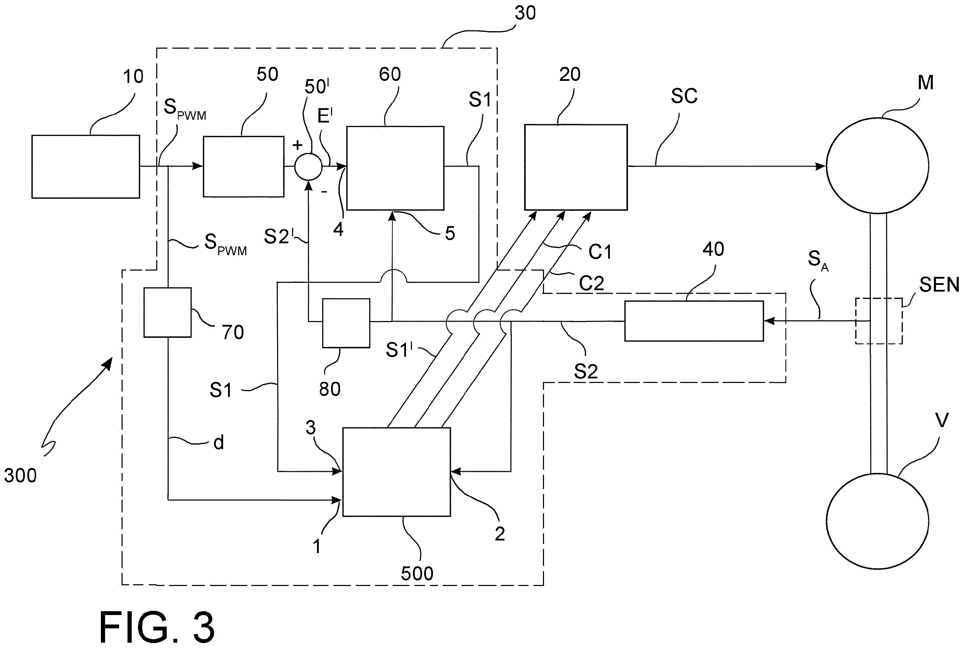

With reference to the example of electronic apparatus 300 in figure 3, the fifth signal S1 is generated starting from a speed error E' of the rotor from a nominal reference value. In other words, such a fifth signal S1 is representative of a deviation of the angular speed of the rotor from a nominal reference value.

The protection block 500 of the motor M is configured to generate a third C1 or a fourth C2 signal following the detection of a first or a second anomalous operation condition of the motor, respectively. For example, the first anomaly condition is representative of a malfunction condition of the motor M caused by the blocked rotor. The second anomaly condition represents a malfunction condition for overload of the motor.

Advantageously, the protection block 500 is configured to send the aforementioned third C1 or fourth C2 signal to the power stage 20 to disable the generation of the power signal SC provided to the motor M by such a power stage 20 and stop the motor M as a consequence.

It is worth noting that the electronic control apparatus 100 in figure 1 implements, by way of example, a logic control diagram of the motor having variable duty-cycle in an open loop. The electronic apparatus 200 in figure 2 implements, by way of example, a logic control diagram of the motor with current adjustment in a closed loop. The electronic apparatus 300 of figure 3 implements, by way of example, a speed adjustment control logic diagram in a closed loop.

With reference to the example of control apparatus 100 in figure 1, the electronic control and protection stage 30 comprises a functional control block 60 adapted to receive the reference signal $S_{PWM}$ at a respective first input 4 and the first digital signal S2, at a respective second input 5, generated by the first block 40 to generate the aforesaid fifth digital signal S1 on a respective output 6.

With reference to the example of control apparatus 200 in figure 2, the electronic control and protection stage 30 comprises the functional control block 60 adapted to receive the current error signal E at the respective first input 4 and the first digital signal S2 generated by the first block 40 at the respective second input 5. The fifth digital signal S1 is provided on the respective output 6.

In greater detail, the current error signal E is obtained at the output of a subtractor block 50' starting from the reference signal $S_{PWM}$, filtered by a filtering block 50, e.g. a low pass filter (LPF), and from a further signal S3 generated by a current sensor block 700 and indicative of the current flowing in the windings of the motor M.

In an embodiment, the current sensor 700 comprises a shunt resistor and possibly also an operational amplifier, which receives in input a current, and the aforementioned further signal S3 is a voltage signal comprising voltage levels proportional to the current which crosses the windings of the electric motor M and ranging, for example, between 0V and 5V.

With reference to the example of control apparatus 300 in figure 3, the electronic control and protection stage 30 comprises the functional control block 60 adapted to receive the speed error signal E' at the respective first input 4 and the first digital signal S2 generated by the first block 40 at the respective second input 5. The fifth digital signal S1 is provided on the respective output 6.

In greater detail, such a speed error signal E' is obtained by means of the subtractor block 50' starting from the reference signal $S_{PWM}$, filtered by a filtering block 50, and from a further first signal S2', in particular digital, indicative of the current speed of the motor. In particular, such a further first signal S2' is obtained by means of a third block 80 starting from the first digital signal S2 representative of the speed of the motor M. It is worth noting that the operation performed by the third block 80 on the first digital signal S2 is such to provide such a further first signal S2', which is comparable to the first signal in terms of physical quantity and scale.

In the case of the control apparatuses 200 and 300 in figures 2 and 3, an increase of the module of fifth signal S1 corresponds to an increase of the module of error signal E, E' to ensure an increase of the current, and thus of the power, supplied to the motor M by means of the power signal SC. Conversely, a decrease of the module of the fifth signal S1 corresponds to a decrease of the module of error signal E, E' to reduce the current supplied to the motor M.

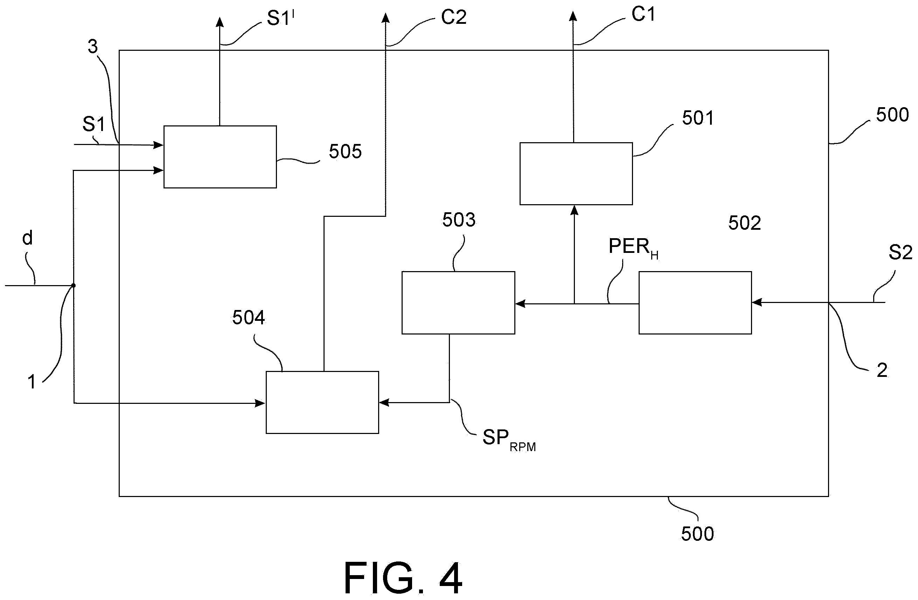

The method for controlling the electric motor M of the present invention will be described in greater detail with reference to figure 4, which illustrates a functional block chart of a protection block 500 included in each electronic control apparatus 100, 200, 300 in figures 1-3.

As the first digital signal S2 indicative of the rotation speed of the motor M is a periodical signal, the step of generating the third C1 or the fourth C2 signal of the method of the invention comprises a common step of calculating 502 a period $PER_H$ of the first signal S2 obtained starting from the Hall sensor SEN. By way of example, being the first digital signal S2 representative of a square wave, such a period $PER_H$ represents the time elapsing between two consecutive up-edges of such a first signal S2.

Furthermore, the step of generating the third signal C1 comprises a step 501 of detecting, by the protection block 500, that the aforesaid period $PER_H$ of the first signal S2 is higher than a maximum predetermined constant value $PER_{H\_max}$, i.e. that the following expression applies:

$$PER_H > PER_{H\_max} \qquad (1)$$

In such a manner, the protection block 500 detects the blocked rotor condition, i.e. the rotor fixed in a given position, which corresponds to the condition in which the Hall sensor SEN provides a first digital signal S2 always fixed to either the high value or the low value.

When the condition (1) occurs, the generation of the third signal C1 disables the generation of the power signal SC provided to the motor M by the power stage 20 and consequently stops the motor M.

It is worth noting that the protection expressed by the condition (1) applies to all control modes of the motor M that are guaranteed by the control apparatuses 100, 200 and 300.

Furthermore, with reference to the step of generating the fourth signal C2, the control method of the invention firstly comprises a step 503 of calculating a speed $SP_{RPM}$ of the motor M starting from the aforementioned period $PER_H$ for the first digital signal S2 based on the equation:

$$SP_{RPM} = \frac{1}{PER_H} \cdot \frac{60}{p} \qquad (2)$$

wherein p is a parameter representing the number of polar pairs of the motor M, $PER_H$ is the period of the first signal S2, and the speed $SP_{RPM}$ of the motor M is expressed in revolutions per minute (rpm).

In relation to the application, it is possible to define a minimum rotation speed $SP_{RPM\_min}$ and a maximum rotation speed $SP_{RPM\_max}$ of the motor M, from which it is possible to obtain minimum and maximum values of the Hall period $PER_H$:

$$PER_{H\_min} = \frac{1}{SP_{RPM\_max}} \cdot \frac{60}{p} \qquad (3)$$

$$PER_{H\_max} = \frac{1}{SP_{RPM\_min}} \cdot \frac{60}{p} \qquad (4)$$

In greater detail, such a step of generating the fourth signal C2 comprises the following steps, indicated as a whole by reference numeral 504.

A first step of providing a nominal speed characteristic $SP_{RPM}(d)$ of the motor M starting from a discreet number of values of the second signal d representative of the duty-cycle associated with the reference signal $S_{PWM}$.

A second step of defining a "limit characteristic" $SP_{LIMIT}(d)$ of the speed of the motor M such that the equation applies:

$$SP_{LIMIT}(d) = SP_{RPM}(d) - \Delta SP \qquad (5)$$

wherein $\Delta SP$ is representative of a decrease in the allowed maximum speed due to an abnormal load of the motor, $SP_{RPM}(d)$ represents the nominal speed characteristic of the motor, $SP_{LIMIT}(d)$ represents the speed limit characteristic of the motor.

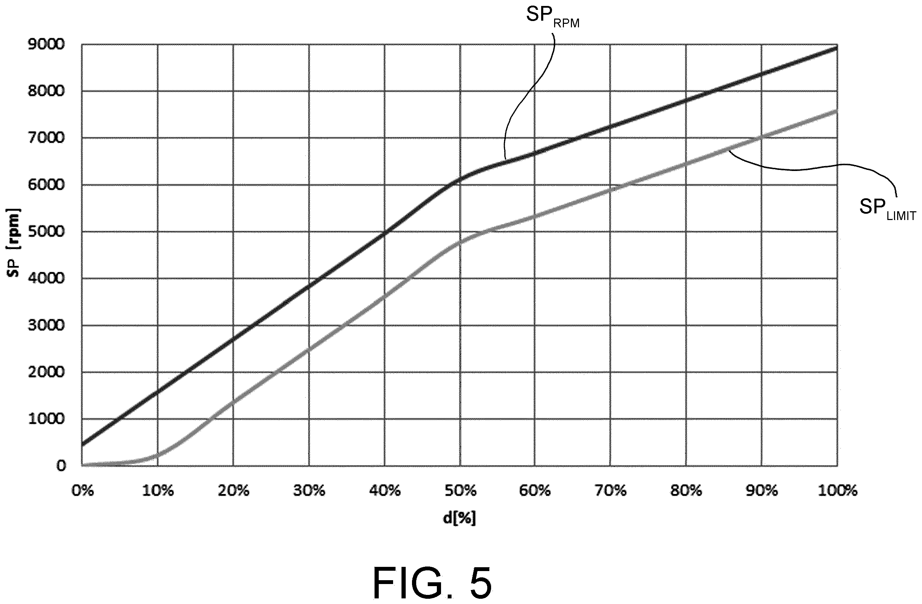

Figure 5 shows examples of patterns of the nominal speed characteristic $SP_{RPM}(d)$ of the motor and of the speed limit characteristic $SP_{LIMIT}(d)$ of the motor as a function of the duty-cycle d (in percentage value).

It is worth noting that in the entire operating range, the limit characteristic $SP_{LIMIT}(d)$ of the motor speed is such that if the motor M moves at a slower speed than the limit speed the windings thereof could undergo an excessive heating and reach a higher temperature that the maximum temperature set by the standard.

Furthermore, the maximum period $PER_{H\_max}$ of the first digital signal S2 and the limit characteristic $SP_{LIMIT}(d)$ of the motor speed are characteristic parameters of the electric motor M and/or of the particular application, are thus known beforehand. Such parameters are an integral part of the control firmware.

Indeed, as mentioned above, the maximum period $PER_{H\_max}$ is a constant. Instead, the representation of the limit characteristic parameter $SP_{LIMIT}(d)$ of the motor speed is more articulated.

In a first embodiment, such a limit characteristic parameter $SP_{LIMIT}(d)$ may be assimilated to a memory buffer including, for example, 100 memory positions and thus one hundred values. In particular, the buffer is adapted to store the value of $SP_{LIMIT}(1)$ in a first position, the value of $SP_{LIMIT}(2)$ in a second position and so on to the last position, in which the buffer is adapted to store the value of $SP_{LIMIT}(100)$. In such a case, the limit characteristic $SP_{LIMIT}(d)$ of the motor speed is represented by means of such one hundred parameters.

In another example, the speed limit characteristic of the motor $SP_{LIMIT}(d)$ is of linear type and can be expressed by the equation:

$$SP_{LIMIT}(d) = m \cdot d + q \qquad (6)$$

wherein:

$$m = \frac{SP_{LIMIT}(1) - SP_{LIMIT}(100)}{d_1 - d_{100}} \qquad (7)$$

and

$$q = \frac{d_1 \cdot SP_{LIMIT}(100) - d_{100} \cdot SP_{LIMIT}(1)}{d_1 - d_{100}} \qquad (8)$$

with $d_1$ and $d_{100}$ which represent a first and a second duty-cycle parameter, $SP_{LIMIT}(1)$ and $SP_{LIMIT}(100)$, which represent a first and a second speed limit characteristic parameter of the motor. In this case, there are only four data to be considered as parameters representative of the motor speed limit characteristic $SP_{LIMIT}(d)$ : $d_1$, $d_{100}$, $SP_{LIMIT}(1)$ and $SP_{LIMIT}(100)$.

In a yet other example, the speed limit characteristic of the motor $SP_{LIMIT}(d)$ is of linear type in parts and can be expressed by the equation:

$$Speed_{LIMIT}(d) = \begin{cases} Speed_{LIMIT}(d) = m_1 \cdot d + q_1 & d \in [d_1 \quad d_z[ \\ Speed_{LIMIT}(d) = m_2 \cdot d + q_2 & d \in [d_z \quad d_y[ \\ Speed_{LIMIT}(d) = m_3 \cdot d + q_3 & d \in [d_y \quad d_{100}] \end{cases} \qquad (9)$$

wherein the values of the parameters $m_1$, $m_2$, $m_3$ and $q_1$, $q_2$, $q_3$ can be expressed in manner similar to that of equations (7) and (8).

In a third step of the method the aforesaid fourth signal C2 is generated when the motor speed $SP_{RPM}$ calculated with the expression (2) is lower than the motor speed limit characteristic $SP_{LIMIT}(d)$, i.e. when the following condition occurs:

$$SP_{RPM} < SP_{LIMIT}(d) \qquad (10)$$

In such a manner, the protection block 500 is adapted to detect the overload condition. When the condition (10) occurs, the generation of the fourth signal C2 disables the generation of the power signal SC provided to the motor M by the power stage 20 and consequently stops the motor M.

It is worth noting that the protection expressed by the condition (10) applies to all control modes associated with the control apparatuses 100, 200 and 300 described above.

With reference to the control with closed loop speed adjustment only, i.e. with reference to the apparatus 300 in figure 3, the method provides the following control steps, indicated by reference numeral 505 as a whole.

In a first step of the method a maximum duty-cycle value $d_{motorMAX}(d)$ is fixed for each duty-cycle value of the second signal d associated with the reference signal $S_{PWM}$.

In a subsequent step a further duty-cycle signal $d_{motor}$ representative of the duty-cycle associated with the fifth signal S1 is provided. Such a duty-cycle signal $d_{motor}$ is representative of a measure of the power transferred to the electric motor M.

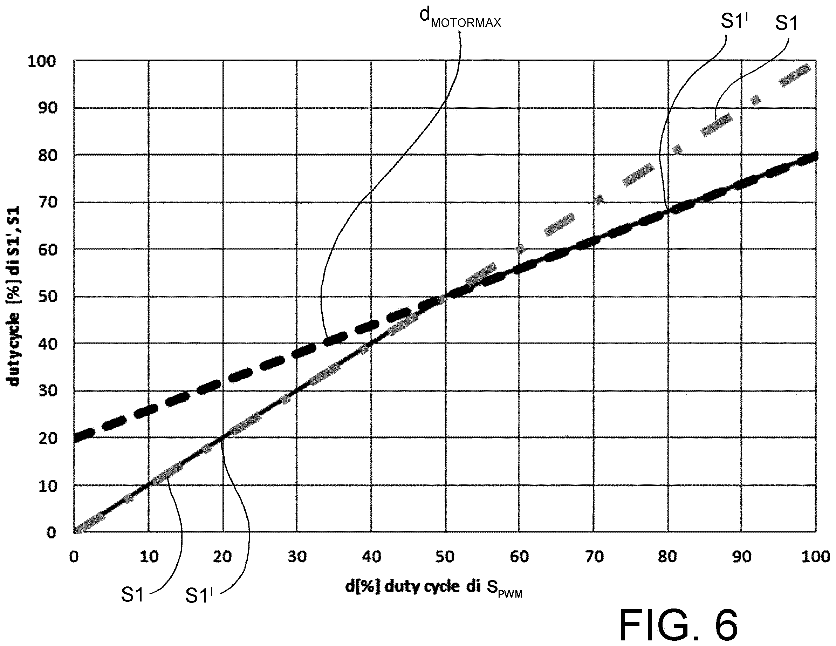

Figure 6 shows by way of example a pattern of the duty-cycle signals (in percentage) of the fifth digital signal S1 and of a sixth digital signal S1' generated by the protection block 500 as a function of the reference signal duty-cycle $S_{PWM}$ (in percentage value).

In particular, the protection block 500 is configured to generate the sixth signal S1', substantially coinciding with the fifth signal S1, when such a duty-cycle value $d_{motor}$ associated with the fifth signal S1 is lower than the maximum duty-cycle value $d_{motorMAX}(d)$, i.e. the following condition occurs:

$$d_{motor} < d_{motorMAX}(d) \qquad (11)$$

Alternatively, the protection block 500 is adapted to generate such a sixth signal S1' substantially coinciding with the maximum duty-cycle value $d_{motorMAX}(d)$ when such a value of the further duty-cycle signal $d_{motor}$ associated with the fifth signal S1 is greater than $d_{motorMAX}(d)$, i.e. the following occurs:

7

$$d_{motor} \geq d_{motorMAX}(d) \qquad\qquad (12)$$

In the embodiment shown in figure 6, the maximum duty-cycle value $d_{motorMAX}(d)$ is expressed by means of a linear characteristic by means of the equation:

$$d_{motorMAX}(d) = m_{motor} \cdot d + q_{motor} \qquad (13)$$

wherein

$$m_{motor} = \frac{d_{motorMAX}(1) - d_{motorMAX}(100)}{d_1 - d_{100}} \qquad (14)$$

and

$$q_{motor} = \frac{d_1 \cdot d_{motorMAX}(100) - d_{100} \cdot d_{motorMAX}(1)}{d_1 - d_{100}} \qquad (15)$$

The control method of a permanent magnet electric motor M according to the invention has many advantages.

Firstly, such a method allows to control the motor to guarantee the safety levels required by the CEI EN 60335-1 standard without necessarily needing to use thermal-protection devices, thus ensuring a non-negligible saving in terms of overall cost of the motor apparatus.

Furthermore, the method of the invention exclusively based on detecting the speed by the motor M with Hall sensor SEN avoids, particularly in relation to the apparatuses 100 and 300, the need to detect the current of the motor M. This makes the use of complex and costly additional electronic devices unnecessary.

Furthermore, the detection of the motor speed on which the present invention is based is more reliable because it is immune from electromagnetic interference produced by the motor itself.

A person skilled in art may make changes and adaptations to the embodiments of the aforesaid method for controlling an electric motor or can replace elements with others which are functionally equivalent to satisfy contingent needs without departing from the scope of protection of the appended claims. All the features described above as belonging to one possible embodiment may be implemented independently from the other described embodiments.

**LEGEND OF THE DRAWINGS**

**Figure 6**

"duty-cycle [%] di S1, S2" = duty-cycle [%] of S1, S2 "d[%] duty-cycle di $S_{PWM}$" = d[%] duty-cycle of $S_{PWM}$

**Claims**

1. A method for controlling a single-phase permanent magnet electric motor (M) movable through a power signal (SC) generated by an electronic control apparatus (100, 200, 300) of the motor based on a reference signal ($S_{PWM}$), said method comprising the steps of:

   - generating, by a sensor unit (SEN, 40) associated with the motor (M), a first signal (S2) representative of the rotation speed of the motor (M);
   - providing a protection block (500) of the motor against operation anomalies, which is included in said electronic control apparatus (100, 200, 300);
   - providing a second signal (d) at a first input (1) of said protection block (500) of the motor, said second signal (d) being representative of duty-cycle values associated with said reference signal ($S_{PWM}$) ;
   - providing said first signal (S2) at a second input (2) of said protection block (500) of the motor;
   - generating, by the protection block (500) of the motor, based on said first signal (S2) and second signal (d), a third (C1) signal when a first operating condition of anomalous operation of the motor (M) is detected, a fourth (C2) signal when a second operating condition of anomalous operation of the motor (M) is detected;

- disabling the generation of the power signal (SC) provided to the motor (M) by said electronic control apparatus (100, 200, 300) based on said third (C1) or fourth (C2) signals to stop the motor,

the method further comprising the step of providing a fifth signal (S1) to a third input (3) of said protection block (500) of the motor for actuating said power signal (SC), and the further steps (505) of:

- setting a maximum duty-cycle signal value ($d_{motorMAX}(d)$) per each value of said second duty-cycle signal (d) associated with the reference signal ($S_{PWM}$);
- providing a further duty-cycle signal ($d_{motor}$) representative of the duty-cycle value associated with said fifth signal (S1);
- generating a sixth signal (S1'), said sixth signal being:

- coincident with said fifth signal (S1) when said duty-cycle value ($d_{motor}$) associated with said fifth signal (S1) is less than said maximum duty-cycle value ($d_{motorMAX}(d)$),
- coincident with said maximum duty-cycle signal value ($d_{motorMAX}(d)$) when said duty-cycle value ($d_{motor}$) associated with said fifth signal (S1) is larger than or equal to said maximum duty-cycle value ($d_{motorMAX}(d)$).

2. The method for controlling an electric motor (M) according to claim 1, wherein said first signal (S2) indicative of the rotation speed of the motor (M) is a periodic signal, and said step of generating said third (C1) or said fourth (C2) signals comprises a step (502) of calculating a period ($PER_H$) of said first signal (S2) .

3. The method for controlling an electric motor (M) according to claim 2, wherein said step of generating said third signal (C1) comprises a step (501) of detecting that said period ($PER_H$) of the first signal (S2) is larger than a preset constant maximum value ($PER_{H\_max}$).

4. The method for controlling an electric motor (M) according to claim 2, wherein said step of generating said fourth signal (C2) comprises a step (503) of calculating a speed ($SP_{RPM}$) of the motor (M) starting from said period ($PER_H$) of the first signal (S2) based on the equation:

$$SP_{RPM} = \frac{1}{PER_H} \cdot \frac{60}{p}$$

wherein p is representative of the number of polar pairs of the motor (M), $PER_H$ is the period of the first signal (S2), said speed ($SP_{RPM}$) of the motor (M) being expressed in revolutions per minute.

5. The method for controlling an electric motor (M) according to claim 4, wherein said step of generating said fourth signal (C2) comprises the steps (504) of:

- providing a nominal speed characteristic ($SP_{RPM}(d)$) of the motor (M) starting from a discrete number of values of said second signal (d) associated with said reference signal ($S_{PWM}$);
- defining a speed limit characteristic ($SP_{LIMIT}(d)$) of the motor (M) such that:

$$SP_{LIMIT}(d) = SP_{RPM}(d) - \Delta SP$$

wherein $\Delta SP$ is representative of a decrease in the allowed maximum speed due to an abnormal load of the motor, $SP_{RPM}(d)$ represents the nominal speed characteristic of the motor, $SP_{LIMIT}(d)$ represents the speed limit characteristic of the motor;
- generating said fourth signal (C2) when said speed of the motor ($SP_{RPM}$) is less than said speed limit characteristic of the motor ($SP_{LIMIT}(d)$).

6. The method for controlling an electric motor (M) according to any of the preceding claims, wherein said sensor unit (SEN) comprises a Hall effect sensor.

7. The method for controlling an electric motor (M) according to claim 5, wherein the speed limit characteristic of the motor ($SP_{LIMIT}(d)$) is a characteristic of the linear type.

8. The method for controlling an electric motor (M) according to claim 5, wherein the speed limit characteristic of the motor ($SP_{LIMIT}(d)$) is a characteristic of the piecewise linear type.

9. The method for controlling an electric motor (M) according to claim 1, wherein said first and second operating conditions of anomalous operation of the motor (M) are a condition of locked rotor and a motor overload condition, respectively.

**Patentansprüche**

1. Verfahren zum Steuern eines einphasigen Permanentmagnet-Elektromotors (M), der durch ein Stromsignal (SC) bewegbar ist, das von einer elektronischen Steuervorrichtung (100, 200, 300) des Motors basierend auf einem Referenzsignal ($S_{PWM}$) erzeugt wird,
   wobei das Verfahren die Schritte aufweist:

   - Erzeugen, mit einer dem Motor (M) zugeordneten Sensoreinheit (SEN, 40), eines ersten Signals (S2), das die Drehzahl des Motors (M) repräsentiert;
   - Bereitstellen eines Schutzblocks (500) des Motors gegen Betriebsanomalien, der in der elektronischen Steuervorrichtung (100, 200, 300) enthalten ist;
   - Bereitstellen eines zweiten Signals (d) an einem ersten Eingang (1) des Schutzblocks (500) des Motors, wobei das zweite Signal (d) dem Referenzsignal ($S_{PWM}$) zugeordnete Tastzykluswerte repräsentiert;
   - Bereitstellen des ersten Signals (S2) an einem zweiten Eingang (2) des Schutzblocks (500) des Motors;
   - Erzeugen, durch den Schutzblock (500) des Motors, basierend auf dem ersten Signal (S2) und dem zweiten Signal (d),
   eines dritten Signals (C1), wenn ein anormaler erster Betriebszustand des Motors (M) detektiert wird,
   eines vierten Signals (C2), wenn ein anormaler zweiter Betriebszustand des Motors (M) detektiert wird;
   - Sperren der Erzeugung des von der elektronischen Steuervorrichtung (100, 200, 300) zum Motor (M) gelieferten Stromsignals (SC) basierend auf dem dritten (C1) oder vierten (C2) Signal, um den Motor zu stoppen,

   wobei das Verfahren ferner den Schritt aufweist, ein fünftes Signal (S1) an einem dritten Eingang (3) des Schutzblocks (500) des Motors bereitzustellen, um das Stromsignal (SC) zu aktivieren, sowie die weiteren Schritte (505):

   - Setzen eines maximalen Tastzyklus-Signalwerts ($d_{motorMAX}(d)$) pro jedem Wert des dem Referenzsignal ($S_{PWM}$) zugeordneten zweiten Tastzyklussignals (d);
   - Bereitstellen eines weiteren Tastzyklus-Signals ($d_{motor}$), das den dem fünften Signal (S1) zugeordneten Tastzykluswert repräsentiert;
   - Erzeugen eines sechsten Signals (S1'), wobei das sechste Signal:

      - mit dem fünften Signal (S1) zusammenfällt, wenn der dem fünften Signal (S1) zugeordnete Tastzykluswert ($d_{motor}$) kleiner als der maximale Tastzyklus-Signalwert ($d_{motorMAX}(d)$) ist,
      - mit dem maximalen Tastzyklus-Signalwert ($d_{motorMAX}(d)$) zusammenfällt, wenn der dem fünften Signal (S1) zugeordnete Tastzykluswert ($d_{motor}$) größer als oder gleich dem maximalen Tastzykluswert ($d_{motorMAX}(d)$) ist.

2. Das Verfahren zum Steuern eines Elektromotors (M) nach Anspruch 1, wobei das erste Signal (S2), das die Drehzahl des Motors (M) angibt, ein periodisches Signal ist, und der Schritt des Erzeugens des dritten (C1) oder des vierten (C2) Signals einen Schritt (502) aufweist, eine Periode ($PER_H$) des ersten Signals (S2) zu berechnen.

3. Das Verfahren zum Steuern eines Elektromotors (M) nach Anspruch 2, wobei der Schritt des Erzeugens des dritten Signals (C1) einen Schritt (501) aufweist, zu Detektieren, dass die Periode ($PER_H$) des ersten Signals (S2) größer als ein voreingestellter konstanter Maximalwert ($PER_{H\_max}$) ist.

4. Das Verfahren zum Steuern eines Elektromotors (M) nach Anspruch 2, wobei der Schritt zum Erzeugen des vierten Signals (C2) einen Schritt (503) aufweist, eine Drehzahl ($SP_{RPM}$) des Motors (M) ausgehend von der Periode ($PER_H$) des ersten Signals (S2) basierend auf der Gleichung zu berechnen:

$$SP_{RPM} = \frac{1}{PER_H} \cdot \frac{60}{p}$$

wobei p die Anzahl von Pol-Paaren des Motors (M) repräsentiert, $PER_H$ die Periode des ersten Signals (S2) ist, wobei die Drehzahl ($SP_{RPM}$) des Motors (M) in Umdrehungen pro Minute ausgedrückt wird.

5. Das Verfahren zum Steuern eines Elektromotors (M) nach Anspruch 4, wobei der Schritt zum Erzeugen des vierten Signals (C2) die Schritte (504) aufweist:

- Bereitstellen einer Nenndrehzahlcharakteristik ($SP_{RPM}(d)$) des Motors (M) ausgehend von einer diskreten Anzahl von Werten des dem Referenzsignal ($S_{PWM}$) zugeordneten zweiten Signals (d);
- Definieren einer Drehzahl-Grenzcharakteristik ($SP_{LIMIT}(d)$) des Motors (M) derart, dass:

$$SP_{LIMIT}(d) = SP_{RPM}(d) - \Delta SP$$

wobei $\Delta SP$ eine Abnahme der zulässigen Maximaldrehzahl aufgrund einer abnormalen Last des Motors (M) repräsentiert, $SP_{RPM}(d)$ die Nenndrehzahl-Charakteristik des Motors repräsentiert, $SP_{LIMIT}(d)$ die Drehzahl-Grenzcharakteristik des Motors repräsentiert;
- Erzeugen des vierten Signals (C2), wenn die Drehzahl des Motors ($SP_{RPM}$) kleiner als die Drehzahl-Grenzcharakteristik des Motors ($SP_{LIMIT}(d)$) ist.

6. Das Verfahren zum Steuern eines Elektromotors (M) nach einem der vorhergehenden Ansprüche, wobei die Sensoreinheit (SEN) einen Halleffekt-Sensor aufweist.

7. Das Verfahren zum Steuern eines Elektromotors (M) nach Anspruch 5, wobei die Drehzahl-Grenzcharakteristik des Motors ($SP_{LIMIT}(d)$) eine lineare Charakteristik ist.

8. Das Verfahren zum Steuern eines Elektromotors (M) nach Anspruch 5, wobei die Drehzahl-Grenzcharakteristik des Motors ($SP_{LIMIT}(d)$) eine teilweise lineare Charakteristik ist.

9. Das Verfahren zum Steuern eines Elektromotors (M) nach Anspruch 1, wobei die ersten und zweiten Betriebszustände vom abnormalen Betrieb des Motors (M) jeweils ein Rotorblockierzustand und ein Motorüberlastzustand sind.

**Revendications**

1. Procédé de contrôle d'un moteur électrique à aimants permanents monophasé (M) mobile par un signal de puissance (SC) généré par un appareil de contrôle électronique (100, 200, 300) du moteur sur la base d'un signal de référence ($S_{PWM}$),
ledit procédé comprenant les étapes de :

- génération, par une unité de détection (SEN, 40) associée au moteur (M), d'un premier signal (S2) représentant la vitesse de rotation du moteur (M) ;
- fourniture d'un bloc de protection (500) du moteur contre des anomalies de fonctionnement, qui est inclus dans ledit appareil de contrôle électronique (100, 200, 300) ;
- fourniture d'un deuxième signal (d) à une première entrée (1) dudit bloc de protection (500) du moteur, ledit deuxième signal (d) représentant des valeurs de cycle de travail associées audit signal de référence ($S_{PWM}$) ;
- fourniture dudit premier signal (S2) à une deuxième entrée (2) dudit bloc de protection (500) du moteur ;
- génération, par le bloc de protection (500) du moteur, sur la base dudit premier signal (S2) et deuxième signal (d), d'un troisième (C1) signal lorsqu'un premier état de fonctionnement de fonctionnement anormal du moteur (M) est détecté,
d'un quatrième (C2) signal lorsqu'un deuxième état de fonctionnement de fonctionnement anormal du moteur (M) est détecté ;
- désactivation de la génération du signal de puissance (SC) fourni au moteur (M) par ledit appareil de contrôle électronique (100, 200, 300) sur la base desdits troisième (C1) ou quatrième (C2) signaux pour arrêter le moteur,

le procédé comprenant en outre l'étape de fourniture d'un cinquième signal (S1) à une troisième entrée (3) dudit bloc de protection (500) du moteur pour l'actionnement dudit signal de puissance (SC), et les autres étapes (505) de :

- réglage d'une valeur de signal de cycle de travail maximum ($d_{motorMAX}(d)$) pour chaque valeur dudit deuxième signal de cycle de travail (d) associé au signal de référence ($S_{PWM}$) ;
- fourniture d'un autre signal de cycle de travail ($d_{motor}$) représentant la valeur de cycle de travail associée audit cinquième signal (S1) ;
- génération d'un sixième signal (S1'), ledit sixième signal étant :

   - coïncident avec ledit cinquième signal (S1) lorsque ladite valeur de cycle de travail ($d_{motor}$) associée audit cinquième signal (S1) est inférieure à ladite valeur de cycle de travail maximum ($d_{motorMAX}(d)$),
   - coïncident avec ladite valeur de signal de cycle de travail maximum ($d_{motorMAX}(d)$) lorsque ladite valeur de cycle de travail ($d_{motor}$) associée audit cinquième signal (S1) est supérieure ou égale à ladite valeur de cycle de travail maximum ($d_{motorMAX}(d)$).

2. Procédé de contrôle d'un moteur électrique (M) selon la revendication 1, dans lequel ledit premier signal (S2) indiquant la vitesse de rotation du moteur (M) est un signal périodique, et ladite étape de génération dudit troisième (C1) ou dudit quatrième (C2) signaux comprend une étape (502) de calcul d'une période ($PER_H$) dudit premier signal (S2).

3. Procédé de contrôle d'un moteur électrique (M) selon la revendication 2, dans lequel ladite étape de génération dudit troisième signal (C1) comprend une étape (501) de détection du fait que ladite période ($PER_H$) du premier signal (S2) est supérieure à une valeur maximum constante préréglée ($PER_{H\_MAX}$).

4. Procédé de contrôle d'un moteur électrique (M) selon la revendication 2, dans lequel ladite étape de génération dudit quatrième signal (C2) comprend une étape (503) de calcul d'une vitesse ($SP_{RPM}$) du moteur (M) démarrant de ladite période ($PER_H$) dudit premier signal (S2) sur la base de l'équation :

$$SP_{RPM} = \frac{1}{PER_H} \cdot \frac{60}{p}$$

dans lequel p représente le nombre de paires polaires du moteur (M), $PER_H$ est la période du premier signal (S2), ladite vitesse ($SP_{RPM}$) du moteur (M) étant exprimée en tours par minute.

5. Procédé de contrôle d'un moteur électrique (M) selon la revendication 4, dans lequel ladite étape de génération dudit quatrième signal (C2) comprend les étapes (504) de :

- fourniture d'une caractéristique de vitesse nominale ($SP_{RPM}(d)$) du moteur (M) démarrant d'un nombre discret de valeurs dudit deuxième signal (d) associé audit signal de référence ($S_{PWM}$) ;
- définition d'une caractéristique limite de vitesse ($SP_{LIMIT}(d)$) du moteur (M) de sorte que :

$$SP_{LIMIT}(d)) = SP_{RPM}(d) - \Delta SP$$

dans lequel $\Delta SP$ représente une diminution de la vitesse maximum autorisée en raison d'une charge anormale du moteur, $SP_{RPM}(d)$ représente la caractéristique de vitesse nominale du moteur, $SP_{LIMIT}(d))$ représente la caractéristique de limite de vitesse du moteur ;
- génération dudit quatrième signal (C2) lorsque ladite vitesse du moteur ($SP_{RPM}$) est inférieure à ladite caractéristique de limite de vitesse du moteur ($SP_{LIMIT}(d)$).

6. Procédé de contrôle d'un moteur électrique (M) selon l'une quelconque des revendications précédentes, dans lequel ladite unité de détection (SEN) comprend un capteur à effet Hall.

7. Procédé de contrôle d'un moteur électrique (M) selon la revendication 5, dans lequel la caractéristique de limite de vitesse du moteur ($SP_{LIMIT}(d)$) est une caractéristique du type linéaire.

8. Procédé de contrôle d'un moteur électrique (M) selon la revendication 5, dans lequel la caractéristique de limite de vitesse du moteur ($SP_{LIMIT}(d)$) est une caractéristique du type linéaire par morceaux.

9. Procédé de contrôle d'un moteur électrique (M) selon la revendication 1, dans lequel lesdits premier et deuxième états de fonctionnement d'un fonctionnement anormal du moteur (M) sont un état de rotor verrouillé et un état de surcharge de moteur, respectivement.

FIG. 1

FIG. 2

EP 3 002 870 B1

FIG. 3

FIG. 4

FIG. 5

EP 3 002 870 B1

FIG. 6

**EP 3 002 870 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008315808 A1
- US 2013009573 A1

- JP H11103585 A